# EUROPEAN PATENT APPLICATION

(11) **EP 4 647 724 A1**
(43) Date of publication of application: **12.11.2025**
(21) Application number: 25175080.8
(22) Date of filing: 08.05.2025
(51) Int. Cl.: G01C 21/36, G01C 21/00

(54) **METHOD, APPARATUS, AND COMPUTER PROGRAM PRODUCT FOR SECOND LEVEL ANONYMIZATION OF TRAJECTORIES**

(30) Priority: 10.05.2024 US 202418661070
(71) Applicant: HERE Global B.V., 5611 ZT Eindhoven (NL)
(72) Inventor: VIDYAKINA, ELENA, BERLIN (DE); MUMFORD, ELENA, EINDHOVEN (NL); BRAESE, JOHANNES, BERLIN (DE); BENNATI, STEFANO, ZURICH (CH)
(74) Representative: Sariot, Eray

(57) **Abstract**

A method, apparatus, and computer program product are provided for establishing and applying a second level of anonymization of trajectories to improve privacy. Methods may include: receiving anonymized mobility data for a geographic region subdivided into a plurality of map tiles, where the mobility data includes a plurality of probe data points anonymized with a first anonymization level, where sequences of probe data points define trajectories; determining, based on the anonymized mobility data, one or more map tiles of the plurality of map tiles where anonymization of trajectories using the first anonymization level fails to satisfy a predefined anonymity parameter value; removing a subset of the anonymized mobility data corresponding to the one or more map tiles; and publishing the anonymized mobility data without the subset of the mobility data corresponding to the one or more map tiles for use with one or more location-based services.

## Description

### TECHNOLOGICAL FIELD

An example embodiment of the present disclosure relates to anonymizing trajectories of mobile devices, and more particularly, to establishing and applying a second level of anonymization of trajectories to improve privacy.

### BACKGROUND

Service providers and device manufacturers (e.g., wireless, cellular, navigation, etc.) are continually challenged to deliver value and convenience to consumers by providing compelling and useful services. Location-based services have been developed to provide users with useful and relevant information regarding route planning and to facilitate route guidance along the way. Substantially static data regarding roadways is used in conjunction with dynamic data, such as traffic, construction, and incident information to provide accurate and timely information to a driver to help route planning and decision making.

Data received from infrastructure monitoring systems and crowd-sourced data has become ubiquitous and may be available for facilitating route guidance and navigation system information. However, this data can be mined to provide various other services to users and to grow the availability of location-based services. The provision of location-based services is dependent upon understanding the location of a user requesting the services. Maintaining anonymity while also being able to access location-based services is a challenge.

### BRIEF SUMMARY

A method, apparatus, and computer program product are provided in accordance with an example embodiment described herein for anonymizing trajectories of mobile devices, and more particularly, to establishing and applying a second level of anonymization of trajectories to improve privacy. According to an example embodiment, an apparatus is provided including at least one processor and at least one memory including computer program code, the at least one memory and computer program code configured to, with the processor, cause the apparatus to at least: receive anonymized mobility data for a geographic region subdivided into a plurality of map tiles, where the mobility data includes a plurality of probe data points anonymized with a first anonymization level, where sequences of probe data points define trajectories; determine, based on the anonymized mobility data, one or more map tiles of the plurality of map tiles where anonymization of trajectories using the first anonymization level fails to satisfy a predefined anonymity parameter value; remove a subset of the anonymized mobility data corresponding to the one or more map tiles; and publish the anonymized mobility data without the subset of the mobility data corresponding to the one or more map tiles for use with one or more location-based services.

According to some embodiments, the anonymized mobility data for the geographic region includes anonymized mobility data satisfying a minimum speed and map-matched to road segments within the plurality of map tiles. Causing the apparatus of some embodiments to determine, based on the anonymized mobility data, one or more map tiles of the plurality of map tiles where anonymization of trajectories using the first anonymization level fails to satisfy the predefined anonymity parameter value includes causing the apparatus to: determine, based on a size of each of the plurality of map tiles, a threshold number of data points a single data source can generate within a respective map tile of the plurality of map tiles; calculate a number of data sources in the respective map tile based on a total number of probe data points within the respective map tile and the threshold number of data points; and determine that the respective map tile fails to satisfy an anonymity parameter value in response to the number of data sources in the respective map tile failing to satisfy a predetermined value. The threshold number of data points a single data source can generate is determined, in some cases, based on the size of each of the plurality of map tiles, a speed associated with the probe data points, and a distance between probe data points of a trajectory.

According to some embodiments, causing the apparatus to determine, based on the anonymized mobility data, one or more map tiles of the plurality of map tiles where anonymization of trajectories using the first anonymization level fails to satisfy the predetermined anonymity parameter value includes causing the apparatus to: analyze geometric patterns of the trajectories within a respective map tile of the plurality of map tiles; identify features of the geometric patterns indicating a presence of multiple data sources within the geometric patterns of the trajectories within the respective map tile; estimate a number of data sources within the respective map tile based, at least in part, on the features of the geometric patterns indicating the presence of multiple data sources; and determine that the respective map tile fails to satisfy an anonymity parameter value in response to the number of data sources in the respective map tile failing to satisfy a predetermined value. The features of the geometric patterns indicating the presence of multiple data sources include, in some embodiments, trajectories crossing on another and parallel trajectories.

Causing the apparatus of some embodiments to determine, based on the anonymized mobility data, one or more map tiles of the plurality of map tiles where anonymization of trajectories using the first anonymization level fails to satisfy the predetermined anonymity parameter value includes causing the apparatus to: determine a minimum number of trajectories passing through a map tile that satisfies an anonymity threshold; calculate a number of trajectories passing through a respective map tile based on the anonymized mobility data; and determine that the respective map tile fails to satisfy an anonymity parameter value in response to the number of trajectories passing through the respective map tile failing to satisfy the minimum number. According to some embodiments, the apparatus is further caused to: apply a second level anonymization level to the anonymized mobility data of the one or more map tiles of the plurality of map tiles where the anonymization of trajectories using the first anonymization level failed to satisfy the predetermined anonymity parameter value to generate re-anonymized mobility data for the one or more map tiles; determine if the re-anonymized mobility data satisfies the predetermined anonymity parameter value; and publish the re-anonymized mobility data for use with the one or more location-based services in response to the re-anonymized mobility data satisfying the predetermined anonymity parameter value.

Embodiments provided herein include a computer program product having at least one non-transitory computer-readable storage medium having computer-executable program code portions stored therein, the computer-executable program code portions including program code instructions to: receive anonymized mobility data for a geographic region subdivided into a plurality of map tiles, where the mobility data includes a plurality of probe data points anonymized with a first anonymization level, where sequences of probe data points define trajectories; determine, based on the anonymized mobility data, one or more map tiles of the plurality of map tiles where anonymization of trajectories using the first anonymization level fails to satisfy a predefined anonymity parameter value; remove a subset of the anonymized mobility data corresponding to the one or more map tiles; and publish the anonymized mobility data without the subset of the mobility data corresponding to the one or more map tiles for use with one or more location-based services.

According to some embodiments, the anonymized mobility data for the geographic region includes anonymized mobility data satisfying a minimum speed and map-matched to road segments within the plurality of map tiles. The program code instructions of some embodiments to determine, based on the anonymized mobility data, one or more map tiles of the plurality of map tiles where anonymization of trajectories using the first anonymization level fails to satisfy the predefined anonymity parameter value include program code instructions to: determine, based on a size of each of the plurality of map tiles, a threshold number of data points a single data source can generate within a respective map tile of the plurality of map tiles; calculate a number of data sources in the respective map tile based on a total number of probe data points within the respective map tile and the threshold number of data points; and determine that the respective map tile fails to satisfy an anonymity parameter value in response to the number of data sources in the respective map tile failing to satisfy a predetermined value. The threshold number of data points a single data source can generate is determined, in some cases, based on the size of each of the plurality of map tiles, a speed associated with the probe data points, and a distance between probe data points of a trajectory.

According to some embodiments, the program code instructions to determine, based on the anonymized mobility data, one or more map tiles of the plurality of map tiles where anonymization of trajectories using the first anonymization level fails to satisfy the predetermined anonymity parameter value include program code instructions to: analyze geometric patterns of the trajectories within a respective map tile of the plurality of map tiles; identify features of the geometric patterns indicating a presence of multiple data sources within the geometric patterns of the trajectories within the respective map tile; estimate a number of data sources within the respective map tile based, at least in part, on the features of the geometric patterns indicating the presence of multiple data sources; and determine that the respective map tile fails to satisfy an anonymity parameter value in response to the number of data sources in the respective map tile failing to satisfy a predetermined value. The features of the geometric patterns indicating the presence of multiple data sources include, in some embodiments, trajectories crossing on another and parallel trajectories.

The program code instructions of some embodiments to determine, based on the anonymized mobility data, one or more map tiles of the plurality of map tiles where anonymization of trajectories using the first anonymization level fails to satisfy the predetermined anonymity parameter value include program code instructions to: determine a minimum number of trajectories passing through a map tile that satisfies an anonymity threshold; calculate a number of trajectories passing through a respective map tile based on the anonymized mobility data; and determine that the respective map tile fails to satisfy an anonymity parameter value in response to the number of trajectories passing through the respective map tile failing to satisfy the minimum number.

According to some embodiments, the computer program product further includes program code instructions to: apply a second level anonymization level to the anonymized mobility data of the one or more map tiles of the plurality of map tiles where the anonymization of trajectories using the first anonymization level failed to satisfy the predetermined anonymity parameter value to generate re-anonymized mobility data for the one or more map tiles; determine if the re-anonymized mobility data satisfies the predetermined anonymity parameter value; and publish the re-anonymized mobility data for use with the one or more location-based services in response to the re-anonymized mobility data satisfying the predetermined anonymity parameter value.

Embodiments described herein further include a computer program product having computer-executable program code portions stored therein, the computer executable program code portions including program code instructions configured to perform any method described herein.

Embodiments provided herein include methods including: receiving anonymized mobility data for a geographic region subdivided into a plurality of map tiles, where the mobility data includes a plurality of probe data points anonymized with a first anonymization level, where sequences of probe data points define trajectories; determining, based on the anonymized mobility data, one or more map tiles of the plurality of map tiles where anonymization of trajectories using the first anonymization level fails to satisfy a predefined anonymity parameter value; removing a subset of the anonymized mobility data corresponding to the one or more map tiles; and publishing the anonymized mobility data without the subset of the mobility data corresponding to the one or more map tiles for use with one or more location-based services. The methods may be computer-implemented methods.

According to some embodiments, the anonymized mobility data for the geographic region includes anonymized mobility data satisfying a minimum speed and map-matched to road segments within the plurality of map tiles. According to some embodiments, determining, based on the anonymized mobility data, one or more map tiles of the plurality of map tiles where anonymization of trajectories using the first anonymization level fails to satisfy the predefined anonymity parameter value includes: determining, based on a size of each of the plurality of map tiles, a threshold number of data points a single data source can generate within a respective map tile of the plurality of map tiles; calculating a number of data sources in the respective map tile based on a total number of probe data points within the respective map tile and the threshold number of data points; and determining that the respective map tile fails to satisfy an anonymity parameter value in response to the number of data sources in the respective map tile failing to satisfy a predetermined value. The threshold number of data points a single data source can generate is determined, in some cases, based on the size of each of the plurality of map tiles, a speed associated with the probe data points, and a distance between probe data points of a trajectory.

According to some embodiments, determining, based on the anonymized mobility data, one or more map tiles of the plurality of map tiles where anonymization of trajectories using the first anonymization level fails to satisfy the predetermined anonymity parameter value includes: analyzing geometric patterns of the trajectories within a respective map tile of the plurality of map tiles; identifying features of the geometric patterns indicating a presence of multiple data sources within the geometric patterns of the trajectories within the respective map tile; estimating a number of data sources within the respective map tile based, at least in part, on the features of the geometric patterns indicating the presence of multiple data sources; and determining that the respective map tile fails to satisfy an anonymity parameter value in response to the number of data sources in the respective map tile failing to satisfy a predetermined value. The features of the geometric patterns indicating the presence of multiple data sources include, in some embodiments, trajectories crossing on another and parallel trajectories.

According to certain embodiments, determining, based on the anonymized mobility data, one or more map tiles of the plurality of map tiles where anonymization of trajectories using the first anonymization level fails to satisfy the predetermined anonymity parameter value includes: determining a minimum number of trajectories passing through a map tile that satisfies an anonymity threshold; calculating a number of trajectories passing through a respective map tile based on the anonymized mobility data; and determining that the respective map tile fails to satisfy an anonymity parameter value in response to the number of trajectories passing through the respective map tile failing to satisfy the minimum number.

According to some embodiments, the method further includes: applying a second level anonymization level to the anonymized mobility data of the one or more map tiles of the plurality of map tiles where the anonymization of trajectories using the first anonymization level failed to satisfy the predetermined anonymity parameter value to generate re-anonymized mobility data for the one or more map tiles; determining if the re-anonymized mobility data satisfies the predetermined anonymity parameter value; and publishing the re-anonymized mobility data for use with the one or more location-based services in response to the re-anonymized mobility data satisfying the predetermined anonymity parameter value.

Embodiments provided herein include an apparatus including: means for receiving anonymized mobility data for a geographic region subdivided into a plurality of map tiles, where the mobility data includes a plurality of probe data points anonymized with a first anonymization level, where sequences of probe data points define trajectories; means for determining, based on the anonymized mobility data, one or more map tiles of the plurality of map tiles where anonymization of trajectories using the first anonymization level fails to satisfy a predefined anonymity parameter value; means for removing a subset of the anonymized mobility data corresponding to the one or more map tiles; and means for publishing the anonymized mobility data without the subset of the mobility data corresponding to the one or more map tiles for use with one or more location-based services.

According to some embodiments, the anonymized mobility data for the geographic region includes anonymized mobility data satisfying a minimum speed and map-matched to road segments within the plurality of map tiles. According to some embodiments, the means for determining, based on the anonymized mobility data, one or more map tiles of the plurality of map tiles where anonymization of trajectories using the first anonymization level fails to satisfy the predefined anonymity parameter value includes: means for determining, based on a size of each of the plurality of map tiles, a threshold number of data points a single data source can generate within a respective map tile of the plurality of map tiles; means for calculating a number of data sources in the respective map tile based on a total number of probe data points within the respective map tile and the threshold number of data points; and means for determining that the respective map tile fails to satisfy an anonymity parameter value in response to the number of data sources in the respective map tile failing to satisfy a predetermined value. The threshold number of data points a single data source can generate is determined, in some cases, based on the size of each of the plurality of map tiles, a speed associated with the probe data points, and a distance between probe data points of a trajectory.

According to some embodiments, the means for determining, based on the anonymized mobility data, one or more map tiles of the plurality of map tiles where anonymization of trajectories using the first anonymization level fails to satisfy the predetermined anonymity parameter value includes: means for analyzing geometric patterns of the trajectories within a respective map tile of the plurality of map tiles; means for identifying features of the geometric patterns indicating a presence of multiple data sources within the geometric patterns of the trajectories within the respective map tile; means for estimating a number of data sources within the respective map tile based, at least in part, on the features of the geometric patterns indicating the presence of multiple data sources; and means for determining that the respective map tile fails to satisfy an anonymity parameter value in response to the number of data sources in the respective map tile failing to satisfy a predetermined value. The features of the geometric patterns indicating the presence of multiple data sources include, in some embodiments, trajectories crossing on another and parallel trajectories.

According to certain embodiments, the means for determining, based on the anonymized mobility data, one or more map tiles of the plurality of map tiles where anonymization of trajectories using the first anonymization level fails to satisfy the predetermined anonymity parameter value includes: means for determining a minimum number of trajectories passing through a map tile that satisfies an anonymity threshold; means for calculating a number of trajectories passing through a respective map tile based on the anonymized mobility data; and means for determining that the respective map tile fails to satisfy an anonymity parameter value in response to the number of trajectories passing through the respective map tile failing to satisfy the minimum number.

According to some embodiments, the apparatus further includes: means for applying a second level anonymization level to the anonymized mobility data of the one or more map tiles of the plurality of map tiles where the anonymization of trajectories using the first anonymization level failed to satisfy the predetermined anonymity parameter value to generate re-anonymized mobility data for the one or more map tiles; means for determining if the re-anonymized mobility data satisfies the predetermined anonymity parameter value; and means for publishing the re-anonymized mobility data for use with the one or more location-based services in response to the re-anonymized mobility data satisfying the predetermined anonymity parameter value.

### BRIEF DESCRIPTION OF THE DRAWINGS

Having thus described example embodiments of the disclosure in general terms, reference will now be made to the accompanying drawings, which are not necessarily drawn to scale, and wherein:
Figure 1 illustrates a communications diagram in accordance with an example embodiment of the present disclosure;
Figure 2 is a block diagram of an apparatus that may be specifically configured for employing a second level of anonymization of trajectories generated from probe data in accordance with an example embodiment of the present disclosure;
Figure 3 illustrates a mapped area subdivided into map tiles according to an example embodiment of the present disclosure;
Figure 4 illustrates the mapped area of Figure 3 with several map tiles identified as having insufficiently anonymized mobility data according to an example embodiment of the present disclosure;
Figure 5 illustrates the mapped area of Figure 3 with several different map tiles identified as having insufficiently anonymized mobility data according to an example embodiment of the present disclosure; and
Figure 6 is a flowchart of a method for determining an anonymization level for a plurality of areas of a geographic region according to an example embodiment of the present disclosure.

### DETAILED DESCRIPTION

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present disclosure.

A method, apparatus, and computer program product are provided herein in accordance with an example embodiment for anonymizing trajectories of mobile devices, and more particularly, to establishing and applying a second level of anonymization of trajectories to improve privacy. Location-based services are useful to a variety of consumers who may employ location-based services for a wide range of activities. Services such as the identification of traffic density along road segments, providing information regarding goods and services available in a specific location, identifying commuting patterns, and identifying a target group of consumers in a particular location or who travel along a particular path, are among many other location-based services.

Mobility data of users is associated to a privacy score and an accuracy value. The accuracy value is derived from the intrinsic utility of data towards the generation of a location-based service. The privacy value reflects the sensitive information that mobility data can reveal about a user's habits, behaviors, and personal information such as their home or work address.

A location-based services provider wishes to collect as much data as possible to maximize the accuracy of the location-based service, while at the same time minimizing or mitigating the risks for the privacy of users related to the inadvertent disclosure or misuse of data. While location-based services are desirable for both consumers and for service providers, consumers are often concerned with the amount of information shared about their routines and activities. Thus, while consumers and service providers want to engage with location-based services, consumers generally desire to maintain some degree of privacy. Location-based service providers often apply privacy-enhancing algorithms on the mobility data of users. A common approach is splitting and gapping, where trajectories of users are subdivided into a number of shorter sub-trajectories which are pseudonymized and are separated by gaps where data from the original trajectory is dropped. When exchanging data between entities (e.g., location-based service providers), the definition of acceptable anonymization might vary and this may require adaptation of the anonymization of one dataset into a different standard. Adapting anonymization risk can degrade the quality of the mobility data by a large margin.

While various anonymization strategies exist, they generally are often tailored to a specific use case, for which they grant a certain level of utility while reducing privacy risks. Naively applying an anonymization strategy to a different use case can lead to increased privacy risks as well as reduced data utility for that user case. Location-based services (LBS), e.g. real-time traffic information, fleet management, navigation, are based on the analysis of trajectory data that users of such services provide. Location data can be used for multiple application use cases, e.g. traffic estimation, analysis of commuting patterns, etc. Exchanged location data must be anonymized to comply with regulation, but anonymization strategies are tailored to a specific use case and can reduce the utility of the data for use in another use case.

Applying multiple different anonymization strategies to the same, non-anonymized data can lead to high utility in multiple use cases but can also lead to unexpected privacy risks that can arise from the combination of these datasets. By combining two datasets that have been produced from the same original dataset using two different anonymization strategies may lead to inference of more information about the original dataset than can be inferred from each individually anonymized dataset. For example, if one anonymization strategy anonymizes 20% of a dataset using a first technique, while a second anonymization strategy for a different use case anonymizes a different 20% of the dataset using the second technique, combining these two anonymized datasets may reveal 90% or more of the original dataset. Embodiments provided herein provide a second-level anonymization strategy that does not risk reducing the anonymity of anonymized mobility data.

Embodiments described herein provide a method, apparatus, and computer program product through which location information and more specifically, trajectory information can be gathered and shared in a manner that anonymizes the source of the information and makes unmasking of the source difficult. Different data vendors follow different privacy guidelines and as a result, a service provider may receive a dataset that went through some anonymization process (e.g. a first anonymization level) but does not meet the criteria of anonymity for the service provider. The first level of anonymization or first anonymization process applied to a dataset anonymizes the data set to some degree of anonymization. The first anonymization level does not imply to what degree the anonymization is performed, but instead relates to a first round or process of anonymization that has been applied to achieve some degree of anonymization. In such a case, the service provider does not want to store this potentially personally identifying information, and even more so, does not want to share it further without some additional anonymization. Embodiments provided herein provide a solution for a second level of anonymization that can be done when a first level of anonymization is deemed insufficient.

Embodiments of the method described herein employ an anonymization strategy that is suitable to release anonymized data that has a high utility for both traffic estimation use cases and commuting pattern analysis among other uses. An example of insufficient anonymization that benefits from embodiments described herein includes mobility data where trajectory reconstruction is possible for the trajectories that have been broken by splitting and gapping anonymization. Splitting and gapping of trajectories by dropping trajectory data between different-length sub-segments of the trajectories can be a useful anonymization tool; however, a regular pattern in splitting and gapping algorithms or a region where there is low data density can lead to trajectory reconstruction without undue effort.

Embodiments described herein identify a well-anonymized subset of the anonymized mobility data that should be kept and possibly re-anonymized, while the remaining subset of anonymized mobility data is deemed non-anonymizable and is deleted during second-level anonymization. This process ensures that trajectories have substantially higher level of anonymity as the likelihood of reidentification of a mobility data source and reconstruction of an original trajectory is significantly reduced.

The process of example embodiments described herein can be applied at the client (e.g. vehicle, mobile device, etc.) or at a backend (e.g., map services provider, OEM, etc.) as there are no dependencies of the anonymization of one user's trajectory on that of any other user. In the client-side situation, regions of a map area, such as tiles of a tiled spatial grid of the region can be identified as areas for which anonymization is not deemed reasonable. Such map areas may include areas of low-density mobility data, where the passage of a single trajectory through the area results as an easily identified continuation of a trajectory for reconstruction. These areas can be identified temporally (e.g., for certain parts of a day, days of a week, or times of a year) and updated periodically at the client. Backend solutions can dynamically perform similar tasks as a client-side solution; however, the backend solutions can more easily perform real-time analysis of trajectory density and map areas where anonymization of mobility data may be problematic.

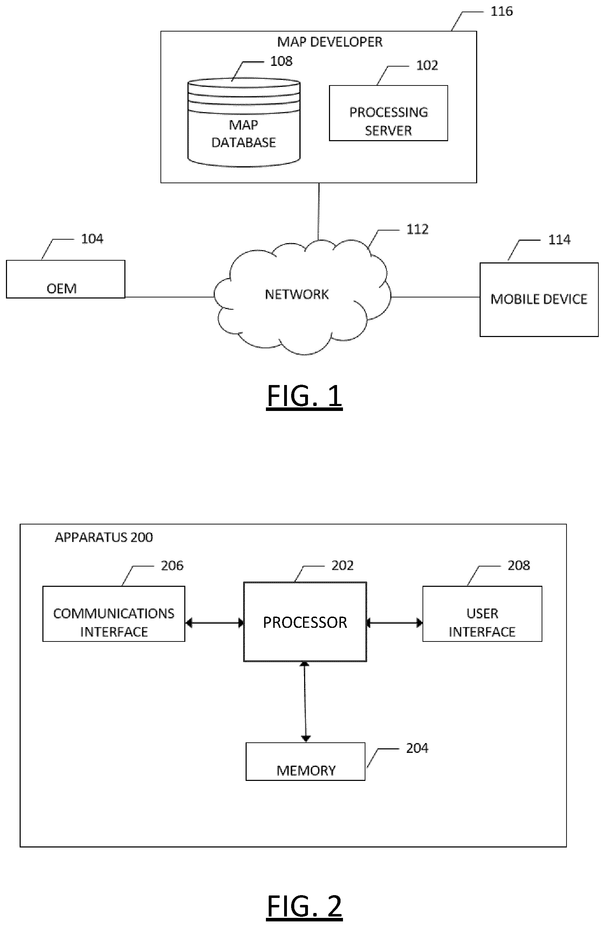

To provide an improved manner of anonymizing trajectories using a second level of anonymization, a system as illustrated in Figure 1 may be used. Figure 1 illustrates a communication diagram of an example embodiment of a system for implementing example embodiments described herein. The illustrated embodiment of Figure 1 includes a map developer 116, a processing server 102 in data communication with an original equipment manufacturer (OEM) 104 and/or a geographic map database, e.g., map database 108 through a network 112, and one or more mobile devices 114. The OEM may be one form of a trajectory source from which a trajectory of a probe or mobile device is received. The trajectory source may optionally include third party service providers or app developers, for example. The mobile device 114 may be associated, coupled, or otherwise integrated with a vehicle, such as in a vehicle's head unit, infotainment unit, or an advanced driver assistance system (ADAS), for example. Additional, different, or fewer components may be provided. For example, many mobile devices 114 may connect with the network 112. The map developer 116 may include computer systems and network of a system operator. The processing server 102 may include the map database 108, such as a remote map server. The network may be wired, wireless, or any combination of wired and wireless communication networks, such as cellular, Wi-Fi, internet, local area networks, or the like.

The OEM 104 may include a server and a database configured to receive probe data from vehicles or devices corresponding to the OEM. For example, if the OEM is a brand of automobile, each of that manufacturer's automobiles (e.g., mobile device 114) may provide probe data to the OEM 104 for processing. That probe data may be encrypted with a proprietary encryption or encryption that is unique to the OEM. The OEM may be the manufacturer or service provider for a brand of vehicle or a device. For example, a mobile device carried by a user (e.g., driver or occupant) of a vehicle may be of a particular brand or service (e.g., mobile provider), where the OEM may correspond to the particular brand or service. The OEM may optionally include a service provider to which a subscriber subscribes, where the mobile device 114 may be such a subscriber. While depicted as an OEM 104 in Figure 1, other entities may function in the same manner described herein with respect to the OEM. For example, independent location-based service providers or other entities may participate and contribute in the same manner as described herein with respect to an OEM. As such, the OEM 104 illustrated in Figure 1 is not limited to original equipment manufacturers but may be any entity participating as described herein with respect to the OEMs.

The OEM 104 may be configured to access the map database 108 via the processing server 102 through, for example, a mapping application, such that the user equipment may provide navigational assistance to a user among other services provided through access to the map developer 116. According to some embodiments, the map developer 116 may function as the OEM, such as when the map developer is a service provider to OEMs to provide map services to vehicles from that OEM. In such an embodiment, the map developer 116 may or may not be the recipient of vehicle probe data from the vehicles of that manufacturer. Similarly, the map developer 116 may provide services to mobile devices, such as a map services provider that may be implemented on a mobile device, such as in a mapping application. According to such an embodiment, the map developer 116 may function as the OEM as the map developer receives the probe data from the mobile devices of users as they travel along a road network.

The map database 108 may include node data, road segment data or link data, point of interest (POI) data, or the like. The map database 108 may also include cartographic data, routing data, and/or maneuvering data. According to some example embodiments, the road segment data records may be links or segments representing roads, streets, or paths, as may be used in calculating a route or recorded route information for determination of one or more personalized routes. The node data may be end points corresponding to the respective links or segments of road segment data. The road link data and the node data may represent a road network, such as used by vehicles, cars, trucks, buses, motorcycles, and/or other entities. Optionally, the map database 108 may contain path segment and node data records or other data that may represent pedestrian paths or areas in addition to or instead of the vehicle road record data, for example. The road/link segments and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The map database 108 can include data about the POIs and their respective locations in the POI records. The map database 108 may include data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the map database 108 can include event data (e.g., traffic incidents, construction activities, scheduled events, unscheduled events, etc.) associated with the POI data records or other records of the map database 108.

The map database 108 may be maintained by a content provider e.g., a map developer. By way of example, the map developer can collect geographic data to generate and enhance the map database 108. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Also, remote sensing, such as aerial or satellite photography, can be used to generate map geometries directly or through machine learning as described herein.

The map database 108 may be a master map database stored in a format that facilitates updating, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by mobile device 114, for example. The navigation-related functions can correspond to vehicle navigation, pedestrian navigation, or other types of navigation.

As mentioned above, the server-side map database 108 may be a master geographic database, but in alternate embodiments, a client side map database 108 may represent a compiled navigation database that may be used in or with end user devices (e.g., mobile device 114) to provide navigation and/or map-related functions. The map database 108 may optionally include grid definitions for applying the disclosed anonymization process. For example, the map database 108 may be used with the mobile device 114 to provide an end user with navigation features. In such a case, the map database 108 can be downloaded or stored on the end user device (mobile device 114) which can access the map database 108 through a wireless or wired connection, such as via a processing server 102 and/or the network 112, for example. The downloaded map database can be updated periodically, on-demand, based on user/application requests (e.g., for a specific area determined to be outdated), such as via the communication network 112. The map database can further be updated with the grid definitions to establish the tessellations of the geographic area.

In one embodiment, the mobile device 114 can be an in-vehicle navigation system, such as an ADAS, a personal navigation device (PND), a portable navigation device, a cellular telephone, a smart phone, a personal digital assistant (PDA), a watch, a camera, a computer, and/or other device that can perform navigation-related functions, such as digital routing and map display. An end user can use the mobile device 114 for navigation and map functions such as guidance and map display, for example, and for determination of one or more personalized routes or route segments based on one or more calculated and recorded routes, according to some example embodiments.

An ADAS may be used to improve the comfort, efficiency, safety, and overall satisfaction of driving. Examples of such advanced driver assistance systems include semi-autonomous driver assistance features such as adaptive headlight aiming, adaptive cruise control, lane departure warning and control, curve warning, speed limit notification, hazard warning, predictive cruise control, adaptive shift control, among others. Other examples of an ADAS may include provisions for fully autonomous control of a vehicle to drive the vehicle along a road network without requiring input from a driver. Some of these advanced driver assistance systems use a variety of sensor mechanisms in the vehicle to determine the current state of the vehicle and the current state of the roadway ahead of the vehicle. These sensor mechanisms may include radar, infrared, ultrasonic, and vision-oriented sensors such as image sensors and light distancing and ranging (LiDAR) sensors.

Some advanced driver assistance systems may employ digital map data. Such systems may be referred to as map-enhanced ADAS. The digital map data can be used in advanced driver assistance systems to provide information about the road network, road geometry, road conditions, and other information associated with the road and environment around the vehicle. Unlike some sensors, the digital map data is not affected by the environmental conditions such as fog, rain, or snow. Additionally, the digital map data can provide useful information that cannot reliably be provided by sensors, such as curvature, grade, bank, speed limits that are not indicated by signage, lane restrictions, and so on. Further, digital map data can provide a predictive capability well beyond the driver's vision to determine the road ahead of the vehicle, around corners, over hills, or beyond obstructions. Accordingly, the digital map data can be a useful and sometimes necessary addition for some advanced driving assistance systems. In the example embodiment of a fully-autonomous vehicle, the ADAS uses the digital map data to determine a path along the road network to drive, such that accurate representations of the road are necessary, such as accurate representations of intersections and turn maneuvers there through.

The processing server 102 may receive probe data, directly or indirectly, from a mobile device 114, such as when the map developer is functioning as the OEM 104. Optionally, the map developer 116 may receive probe data indirectly from the mobile device 114, such as when the mobile device 114 provides probe data to the OEM 104, and the OEM provides certain elements of the probe data to the map developer 116. The OEM 104 may anonymize the probe data or otherwise process the probe data to maintain privacy of a user of the mobile device 114 before providing the data to the map developer 116. The mobile device 114 may include one or more detectors or sensors as a positioning system built or embedded into or within the interior of the mobile device 114. Alternatively, the mobile device 114 uses communications signals for position determination. The mobile device 114 may receive location data from a positioning system, such as a global positioning system (GPS), cellular tower location methods, access point communication fingerprinting, or the like. The server 102, either directly or indirectly, may receive sensor data configured to describe a position of a mobile device, or a controller of the mobile device 114 may receive the sensor data from the positioning system of the mobile device 114. The mobile device 114 may also include a system for tracking mobile device movement, such as rotation, velocity, or acceleration. Movement information may also be determined using the positioning system. The mobile device 114 may use the detectors and sensors to provide data indicating a location of a vehicle. This vehicle data, also referred to herein as "probe data", may be collected by any device capable of determining the necessary information, and providing the necessary information to a remote entity. The mobile device 114 is one example of a device that can function as a probe to collect probe data of a vehicle.

More specifically, probe data (e.g., collected by mobile device 114) may be representative of the location of a vehicle at a respective point in time and may be collected while a vehicle is traveling along a route. According to the example embodiment described below with the probe data being from motorized vehicles traveling along roadways, the probe data may include, without limitation, location data, (e.g. a latitudinal, longitudinal position, and/or height, GPS coordinates, proximity readings associated with a radio frequency identification (RFID) tag, or the like), rate of travel, (e.g. speed), direction of travel, (e.g. heading, cardinal direction, or the like), device identifier, (e.g. vehicle identifier, user identifier, or the like), a time stamp associated with the data collection, or the like. The mobile device 114, may be any device capable of collecting the aforementioned probe data. Some examples of the mobile device 114 may include specialized vehicle mapping equipment, navigational systems, mobile devices, such as phones or personal data assistants, or the like.

An example embodiment of a processing server 102 and/or an OEM 104 may be embodied in an apparatus as illustrated in Figure 2. The apparatus, such as that shown in Figure 2, may be specifically configured in accordance with an example embodiment of the present disclosure for anonymizing trajectories of mobile devices, and more particularly, to anonymizing trajectories in a manner that reduces privacy risks while providing high utility for all use cases. The apparatus may include or otherwise be in communication with a processor 202, a memory device 204, a communication interface 206, and a user interface 208. In some embodiments, the processor (and/or co-processors or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (for example, a computer readable storage medium) comprising gates configured to store data (for example, bits) that may be retrievable by a machine (for example, a computing device like the processor 202). The memory device may be configured to store information, data, content, applications, instructions, or the like, for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

The processor 202 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 202 may be configured to execute instructions stored in the memory device 204 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor specific device (for example, a mobile terminal or a fixed computing device) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The apparatus 200 of an example embodiment may also include a communication interface 206 that may be any means such as a device or circuitry embodied in either hardware or a combination of hardware and software that is configured to receive and/or transmit data to/from a communications device in communication with the apparatus, such as to facilitate communications with one or more mobile devices 114 or the like. In this regard, the communication interface may include, for example, an antenna (or multiple antennae) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware and/or software for supporting communication via cable, digital subscriber line (DSL), universal serial bus (USB) or other mechanisms.

The apparatus 200 may also include a user interface 208 that may in turn be in communication with the processor 202 to provide output to the user and, in some embodiments, to receive an indication of a user input. As such, the user interface may include a display and, in some embodiments, may also include a keyboard, a mouse, a joystick, a touch screen, touch areas, soft keys, one or more microphones, a plurality of speakers, or other input/output mechanisms. In one embodiment, the processor may comprise user interface circuitry configured to control at least some functions of one or more user interface elements such as a display and, in some embodiments, a plurality of speakers, a ringer, one or more microphones and/or the like. The processor and/or user interface circuitry comprising the processor may be configured to control one or more functions of one or more user interface elements through computer program instructions (for example, software and/or firmware) stored on a memory accessible to the processor (for example, memory device 204, and/or the like).

Different location-based services have differing data needs for the service to be accurate and useful. For example, useful trajectory data that has a relatively high accuracy value for traffic estimation includes a spatiotemporal component of the data that is as precise as possible in order to map the trajectory data onto the correct road segment and correctly infer the state of traffic based on the behavior of the trajectory. Useful trajectory data that has a relatively high accuracy value for commuting pattern analysis includes a spatial component of the origin and destination, obscured to some degree. The origin and destination locations can be rounded to a relatively large area.

Currently, there are no anonymization strategies that provide high utility for both the use cases of traffic congestion estimation and analysis of commuting patterns. This leads either to increased privacy risks for the data subjects which produce the trajectory data, or low utility and accuracy values for the location-based service providers. Embodiments described herein provide an anonymization strategy that is suitable to release anonymized trajectory data that has high utility for both the traffic estimation and the commuting pattern analysis use cases through use of second-level anonymization that mitigates much of the risk associated with trajectory recombination and source identification.

Embodiments described herein analyze anonymized trajectory data to determine if second level anonymization is appropriate and performing such second level anonymization. Trajectories that have been anonymized using a first level of anonymization, such as through conventional splitting and gapping may not be sufficiently anonymized for many use cases due to the connectability of the subsets of trajectory data. Other anonymization processes that may be a first level of anonymization can include any anonymization process that keeps the original origin coordinates intact or relatively mild generalization processes such as those that adjust a timestamp (e.g., random offsets), among others. The first level of anonymization or first anonymization process applied to trajectory data can include approaches that may not provide sufficient anonymity from an adversary or attacker. The ability to reidentify a source of trajectory data can be measured based on k-anonymity to identify whether the trajectory data is sufficiently anonymized.

Insufficient anonymization can include a variety of flaws in the anonymized data. For example, if the trajectory identifier of anonymized mobility data changes at every subset that is split and gapped, if the mobility data in the area is sparse an attacker can readily perform a reconstruction attack. In an embodiment where the identifier of a trajectory is changed regularly, even in the scenario of a dense mobility dataset, it may remain relatively apparent to stitch together parts of the split and gapped trajectory with different identifiers, particularly if the identifier changes on a regular basis. Connectivity; however, is only one measure of anonymity of trajectory data.

Embodiments described herein employ a scalable approach to anonymize anonymous data given that some attributes, such as connectivity of a trajectory, are lost due to a first attempt at anonymization. One approach to reconstruct an anonymized trajectory, as an adversary would do, and anonymize the reconstructed data according to defined standards. However, this approach has a drawback that reconstruction risks reidentifying sources of trajectories and potentially exposing personally identifying information, which contradicts the goal of anonymization. Further, such a technique is prone to error.

Embodiments described herein define a method to identify a well-anonymized subset of the mobility data which can be retained and possibly further anonymized, while any remaining subset of mobility data is declared non-anonymizable (at least to the standards of a given service provider) and is deleted during the second level anonymization.

Anonymization of trajectory data can be performed in a variety of ways, and embodiments of the present disclosure facilitate a second-level anonymization that further protects the privacy of a source of a trajectory. According to an example embodiment, each data point of mobility data is published with a unique pseudonym (e.g., trajectory identifiers are not published) and no points are skipped. Even if additional generalization is used, such as using generalization of the timestamps by large intervals, there exists some privacy threat on areas of the map where mobility data is sparse, and points can be seen as coming from a single trace by visual inspection or image analysis of a plot on a map. In such an embodiment, second level anonymization may be necessary to achieve an acceptable level of anonymity in the mobility data. In areas with high density of mobility data only a few points may be easily identified as coming from the same source such that no further anonymization is necessary.

Anonymization by splitting and gapping with reasonably but very regular trajectory and gap sizes may not provide sufficient anonymity within areas having sparse mobility data. However, in areas of high density, anonymity may be significant. Further, anonymity can be improved by random trimming the start and end of sub-trajectories to remove the regularity of the initial anonymization parameters. Unreasonably long trajectories with or without gapping between them can be problematic in areas of sparse mobility data. However, the privacy level can be increased by applying a second level of anonymization.

Embodiments of the present disclosure identify data segments where insufficient privacy cannot be sufficiently remedied by anything but complete removal of the data. Use of k-anonymity can be employed to identify such data. Mobility data can be partitioned into blocks, such as map tiles or cells, in space and time to identify the areas where the data from at least k sources is present. This is performed without attempting to reconstruct the original data. The identification process can be performed by following rules based on assumptions about the nature of the data (e.g., frequency, minimum speed, confinement to the road network) or by applying image recognition techniques to the data plotted on a map.

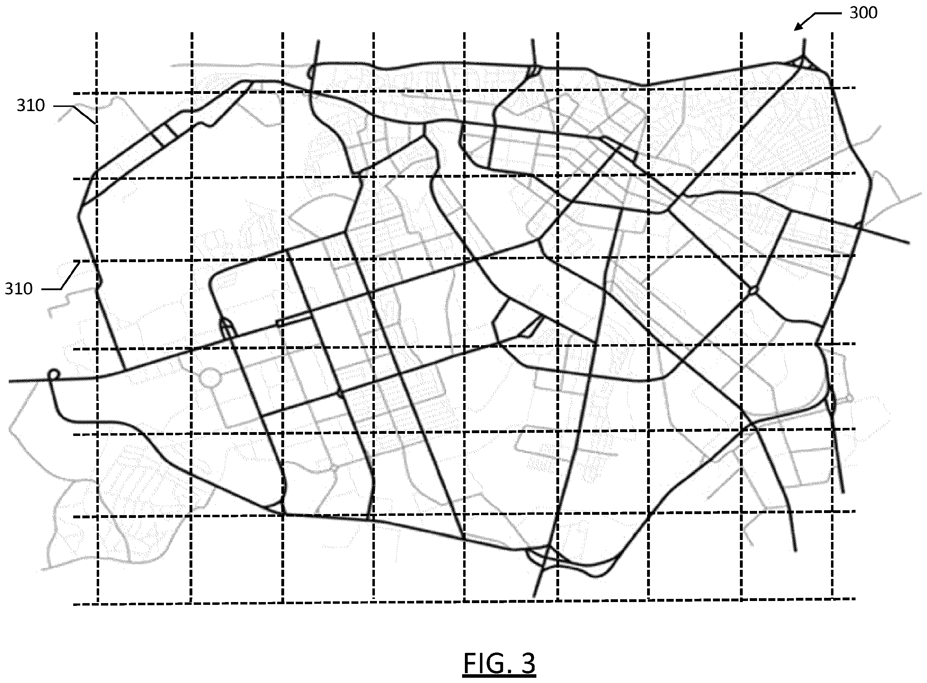

The mobility data is segmented according to map tiles or defined sub-sections of a map geometry. Figure 3 illustrates an example embodiment of a map 300 of a geographic region that is subdivided into map tiles with gridlines 310. The segmentation of the geographic region can be performed according to any method of subdivision and is not limited to a square grid or to a tessellation. For example, a geographic region may be subdivided into a plurality of areas defined by map features, such as major roads, geographic boundaries, postal codes, etc. The size of the map tiles may also be of any size; however, larger map tiles may reduce the effectiveness of location data as larger swaths of data may be omitted from mobility data that can be detrimental to location-based services. Map tiles that are too small can also be problematic as elimination of mobility data from a very small tile may not be effective in anonymizing mobility data as described further below.

While the geographic region can be subdivided into the map tiles as shown in Figure 3, probe data received within each map tile (e.g., probe data or mobility data map-matched to road segments within a respective map tile) can be subdivided into periods of time. These periods of time can be fixed time windows (e.g., quarter-hours, hours, multiple-hour blocks, etc.) and/or can be a time of day (e.g., early morning, morning, midday, afternoon, evening, late night, etc.). Further the periods of time that are subdivided into time-of-day based divisions can be grouped, such as by day of the week (e.g., every Friday morning, or every Saturday from 5pm-7pm). Further, these time divisions can be grouped by season. The grouping of time periods can serve to identify trends in mobility data when using historical data to make predictive decisions regarding whether a map tile will require second-level anonymization or omission from publication.

The map tiles, as shown in the map 300 Figure 3 divided by gridlines 310 include mobility data that is map-matched to the road segments within the map tiles. Each map tile can be analyzed to determine if the mobility within the map tile is sufficiently anonymized. Where mobility data is very sparse with few trajectories within or passing through the tile, the mobility data within that map tile may not be sufficiently anonymized, such that second level anonymization is needed. This second level anonymization can include effectively removing the mobility data within that map tile from mobility data that is published for use with location-based services. Alternatively, the second level anonymization can re-anonymize the mobility data within the map tile to achieve a satisfactory level of anonymity of the mobility data, and subsequently publish the re-anonymized mobility data for location-based services.

The approaches used to identify the map tiles with at least k distinct data traces can include, as one category, pairwise sub-trajectory comparison where pairs of sub-trajectories can be analyzed to create a graph for each tile, where each sub-trajectory is represented as a vertex, and each edge representing a pair of sub-trajectories originating from different sources. To identify such pairs of sub-trajectories, rules can be employed such as: A) two points with the same time stamp coming from different sources; B) two points that are not reachable at a maximum speed come from two different sources (e.g., points that are miles apart, but the timestamp is mere seconds apart); and C) Other rules derived from data parameters such as frequency, timestamp offset, or distance in time. A k-clique in such a graph can correspond to a set of k sub-trajectories originating from different sources.

Another category can include a statistical measure based on the size of the tile, the parameters of the data (frequency and minimum speed) can be used to devise a threshold for any number of data points in a single data source that the tile can be filled with and a calculation of the number of such sources can be determined based on the number of total probes/devices. Using frequency and speed of mobility data within a map tile, the number of probe data points that could be generated by a single probe (data source) can be determined. For example, in a time window of fifteen minutes, a single probe may have been capable of generating thirty data points in the mobility data of a map tile. If the map tile included three hundred data points, that would signify that at least ten data sources produce the mobility data within the map tile. If an estimated number or estimated minimum number of data sources produced the mobility data within a map tile satisfies a predetermined number of data sources, the mobility data of the map tile may be determined to be sufficiently anonymized. If the number of estimated or estimated minimum number of data sources is below a threshold (e.g., based on map tile size), the mobility data may not be considered sufficiently anonymized, and the map data may either be not published or re-anonymized before publication for provision of a location-based service.

Image recognition can be employed to study the geometric patterns of plotting of mobility data from a cell/tile in the map to identify features indicating the presence of data from multiple sources (e.g., trajectory crossings, parallel trajectories, etc.). The mobility data of a map tile may be analyzed, using image recognition techniques, artificial intelligence / machine learning (e.g., a convolutional neural network), or other pattern-analysis techniques to identify patterns of trajectories within a respective map tile. For example, for using image recognition techniques, a supervised machine learning model may be trained with ground truth samples of images corresponding to location datasets which exhibit sufficient intersecting and parallel trajectories (positive sample cases) and samples of images corresponding to other location datasets which exhibit insufficient intersecting and parallel trajectories (negative sample cases). Pattern analysis may employ similar ground truth samples, optionally without an intermediate image rendering of the location data to identify patterns. Patterns may also be defined by rules applied to the data, for example.

Once patterns are identified, features of the patterns can be identified that signify the presence of multiple data sources within the patterns (e.g., multiple probes that generated probe data in the tile). From these patterns and features, a number of data sources (e.g., probes) can be identified. If the number of data sources estimated to have generated the mobility data within the map tile satisfies a predetermined value, the mobility data from that tile may be sufficiently anonymized. However, if the number of data sources estimated to have generated the mobility data within the map tile fails to satisfy the predetermined value, the mobility data from that tile may not be published, and may either be discarded or re-anonymized.

The approaches to identify tiles with at least k distinct data traces, including pairwise sub-trajectory comparison, statistical analysis, and image recognition can be used individually or in combination. An example combination of the approaches can employ an overall metric based on an average or a weighted average calculated from the results of each approach employed. For example, M = (a*Pairwise + b*Statistical + c*Pattern)/3, where M is the metric and a, b, and c, are weights afforded to the Pairwise, Statistical, and Pattern analysis, respectively. Data from tiles for which a predetermined k-anonymity parameter is not satisfied will not be published. Certain approaches, such as image recognition, are well-suited for off-line processing, while other approaches such as pairwise comparison are well-suited to real-time processing.

According the methods described above, areas of a mapped region, such as map tiles, can be analyzed to determine if anonymized probe data associated with a respective map tile is sufficiently anonymized to be published for location-based services. A measure can be employed to determine the level of anonymization, such as a predetermined anonymization value. This value may be in the form of a k-anonymity value or another metric by which the mobility data is evaluated to determine if it can be reassociated with its source. The k-anonymity metric is well suited to embodiments described herein as the k-anonymized dataset is a dataset with every data entity (e.g., a trajectory) shared a predefined attribute

(e.g., a map tile, a road link within a time window, etc.) with k-1 other entities. This attribute provides a level of flexibility when working with different qualities of output data or using different anonymization methods. These different instances of k-anonymity can be unified by adding a weight (e.g., a confidence indicator) based on the type of the attribute that the k-anonymization metric is based on. For example, the aforementioned pair-wise trajectory comparison, statistical measure and pattern analysis techniques may yield a respective k-anonymization metric, which can be unified as previously explained.

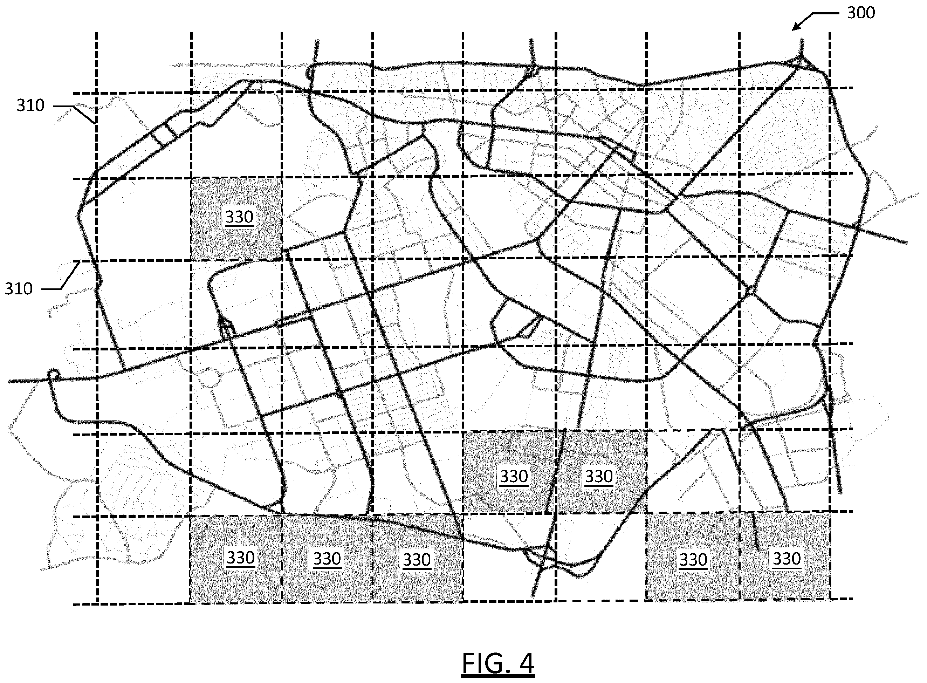

Figure 4 illustrates an example embodiment in which a plurality of map tiles 330 are identified as having anonymized mobility data that is insufficiently anonymized based on the analysis described above. As shown, the map tiles 330 whose mobility data fails to satisfy a predetermined anonymity value are identified, and mobility data associated with those map tiles is not published to a location-based service provider. According to the illustrated embodiment of Figure 4, these map tiles may include areas that are residential in nature and a time frame associated with the mobility data may be during a weekday, when many people work or are at school and not at their homes. As described herein, the map tiles for which mobility data fails to satisfy an anonymization value have a temporal quality that can change over the course of a day or depending on the day of the week, time of the year, etc.

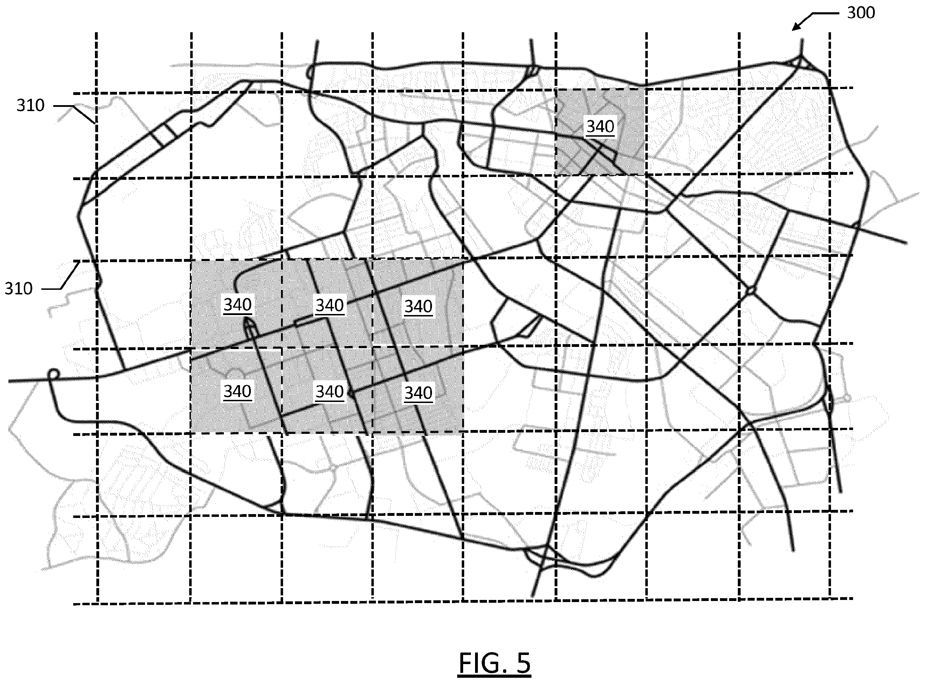

Figure 5 illustrates the same map tiles of Figure 4 in a different time window, such as on a weekend. As shown, the map tiles 340 whose mobility data fails to satisfy a predetermined anonymity value are shown grayed out. These map tiles 340 may cover areas that are industrial in nature or include office buildings or office parks. Such areas often are less busy on weekends, such that the mobility data within the map tiles 340 may be sparse, rendering any mobility data within the map tiles 340 relatively easy to identify a source of the mobility data. The map tiles 330 that were grayed out in Figure 4 representing residential areas may be busier on weekends, whereby there is sufficient mobility data density to render reidentification of any data sources difficult, such that the anonymized mobility data associated with these map tiles is sufficiently anonymized.

Embodiments described herein provide privacy to users of location-based services by adding uncertainty regarding the mobility data of the user. Trajectory data as described herein is defined as a set of data points, each data point including a location and a timestamp. The location may be in the form of latitude and longitude, and potentially altitude. Additional information may be associated with a data point, such as a timestamp (or approximate time stamp), speed, heading, etc.

Location-based service providers may provide trajectory data to customers, such as municipalities interested in traffic optimization, data producers (e.g., drivers who share their trajectory data with the service provider), or the like. Any trajectory that reveals a user's behavioral patterns (e.g., going from A to B) can potentially reveal privacy-sensitive information and locations. Embodiments described herein mitigate this issue by ensuring the mobility data is sufficiently anonymized, and if the mobility data fails to satisfy a predetermined anonymization value, the anonymized mobility data is not published.

As noted above, different use cases have differing trajectory data needs to be effective. Traffic density estimation benefits from a spatiotemporal component that is as accurate as possible in order to identify where traffic is heavy along road segments inferred from behavior of the trajectory data with respect to time. Commuting pattern analysis benefits from a spatial component of the origin and destination, which can be rounded to a relatively large area, such as the size of a zip code or neighborhood, while the temporal area can be rounded to an arbitrary time window (e.g., one hour). Thus, the predetermined anonymization value of example embodiments can vary based on a use case of the mobility data and based on user preferences regarding a privacy level.

The algorithm of example embodiments described herein employs a spatial grid to facilitate determination of areas where a privacy level of anonymized mobility data is satisfactory. A determination on a level of anonymization of anonymized mobility data to be published is made based on this spatial grid. The grid can be introduced in a number of ways. A regular grid can be introduced based on a dataset density and acceptable privacy risk. For example, one-kilometer square grid units. An irregular grid can be introduced based on a variety of features. For example, an irregular grid can be based on topology of the geographical area, postal code, map features (e.g., bodies of water, bridges, road network topology, geographical boundaries/borders, etc.), population density, point-of-interest (POI) density, or the like. The irregular grid can be formed based on an acceptable privacy risk, where cells with higher density can be smaller than those with lower density, where the density can be POI density, population density, building density, etc. The grid may be generated based on some commonly employed tessellations, such as geohash, map tiles, quadtree map tiles H3 hexagonal tiles, etc. The grid definitions described herein may be synchronized with a client device, such as mobile device 114 for a locally-stored tessellated map database. This grid definition may be included as an updatable map layer.

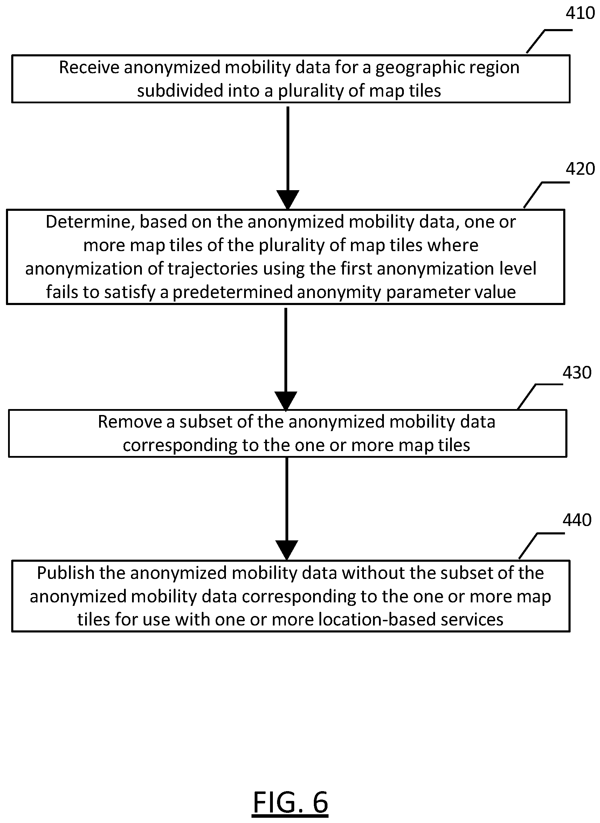

Figure. 6 illustrates a flowchart depicting a method according to an example embodiment of the present disclosure. It will be understood that each block of the flowchart and combination of blocks in the flowchart may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 204 of an apparatus employing an embodiment of the present invention and executed by a processor 202 of the apparatus. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

Figure 6 illustrates a method of anonymizing trajectories of mobile devices, and more particularly, to establishing and applying a second level of anonymization of trajectories to improve privacy. Anonymized mobility data is received for a geographic region that is subdivided into a plurality of map tiles at 410. The anonymized mobility data is anonymized according to a first anonymization level. Based on the anonymized mobility data, one or more map tiles are identified of the plurality of map tiles where anonymization of trajectories using the first anonymization level fails to satisfy a predetermined anonymity parameter value at 420. A subset of the anonymized mobility data corresponding to the one or more map tiles where anonymization of trajectories using the first anonymization level fails to satisfy the predetermined anonymity parameter value is removed from the mobility data at 430. The remaining mobility data is published at 440 including the mobility data without the subset of the anonymized mobility data corresponding to the one or more map tiles for use with one or more location-based services.

In an example embodiment, an apparatus for performing the method of Figure 6 above may include a processor (e.g., the processor 202) configured to perform some or each of the operations (410-440) described above. The processor may, for example, be configured to perform the operations (410-440) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 410-440 may comprise, for example, the processor 202 and/or a device or circuit for executing instructions or executing an algorithm for processing information as described above.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The following numbered paragraphs are also disclosed:
1. An apparatus comprising at least one processor and at least one memory including computer program code, the at least one memory and computer program code configured to, with the processor, cause the apparatus to at least:
   receive anonymized mobility data for a geographic region subdivided into a plurality of map tiles, wherein the anonymized mobility data comprises a plurality of probe data points anonymized with a first anonymization level, wherein sequences of probe data points define trajectories;
   determine, based on the anonymized mobility data, one or more map tiles of the plurality of map tiles where anonymization of the trajectories using the first anonymization level fails to satisfy a predetermined anonymity parameter value;
   remove a subset of the anonymized mobility data corresponding to the one or more map tiles; and
   publish the anonymized mobility data without the subset of the anonymized mobility data corresponding to the one or more map tiles for use with one or more location-based services.
2. The apparatus of paragraph 1, wherein the anonymized mobility data for the geographic region comprises anonymized mobility data satisfying a minimum speed and map-matched to road segments within the plurality of map tiles.
3. The apparatus of paragraph 1, wherein causing the apparatus to determine, based on the anonymized mobility data, the one or more map tiles of the plurality of map tiles where the anonymization of trajectories using the first anonymization level fails to satisfy the predetermined anonymity parameter value comprises causing the apparatus to:
   determine, based on a size of each of the plurality of map tiles, a threshold number of data points a single data source can generate within a respective map tile of the plurality of map tiles;
   calculate a number of data sources in the respective map tile based on a total number of probe data points within the respective map tile and the threshold number of data points; and
   determine that the respective map tile fails to satisfy the predetermined anonymity parameter value in response to the number of data sources in the respective map tile failing to satisfy a predetermined value.
4. The apparatus of paragraph 3, wherein the threshold number of data points a single data source can generate is determined based on the size of each of the plurality of map tiles, a speed associated with the probe data points, and a distance between the probe data points of a trajectory.
5. The apparatus of paragraph 1, wherein causing the apparatus to determine, based on the anonymized mobility data, the one or more map tiles of the plurality of map tiles where the anonymization of trajectories using the first anonymization level fails to satisfy the predetermined anonymity parameter value comprises causing the apparatus to:
   analyze geometric patterns of the trajectories within a respective map tile of the plurality of map tiles;
   identify features of the geometric patterns indicating a presence of multiple data sources within the geometric patterns of the trajectories within the respective map tile;
   estimate a number of data sources within the respective map tile based, at least in part, on the features of the geometric patterns indicating the presence of multiple data sources; and
   determine that the respective map tile fails to satisfy the predetermined anonymity parameter value in response to the number of data sources in the respective map tile failing to satisfy a predetermined value.
6. The apparatus of paragraph 5, wherein the features of the geometric patterns indicating the presence of the multiple data sources comprise at least trajectories crossing one another and parallel trajectories.
7. The apparatus of paragraph 1, wherein causing the apparatus to determine, based on the anonymized mobility data, the one or more map tiles of the plurality of map tiles where the anonymization of trajectories using the first anonymization level fails to satisfy the predetermined anonymity parameter value comprises causing the apparatus to:
   determine, a minimum number of trajectories passing through a map tile that satisfies an anonymity threshold;
   calculate a number of trajectories passing through a respective map tile based on the anonymized mobility data; and
   determine that the respective map tile fails to satisfy the predetermined anonymity parameter value in response to the number of trajectories passing through the respective map tile failing to satisfy the minimum number of trajectories.
8. The apparatus of paragraph 1, wherein the apparatus is further caused to:
   apply a second anonymization level to the anonymized mobility data of the one or more map tiles of the plurality of map tiles where the anonymization of the trajectories using the first anonymization level fails to satisfy the predetermined anonymity parameter value to generate re-anonymized mobility data for the one or more map tiles;
   determine if the re-anonymized mobility data satisfies the predetermined anonymity parameter value; and
   publish the re-anonymized mobility data for the one or more map tiles for use with the one or more location-based services in response to the re-anonymized mobility data satisfying the predetermined anonymity parameter value.
9. A computer program product comprising at least one non-transitory computer-readable storage medium having computer-executable program code portions stored therein, the computer-executable program code portions comprising program code instructions configured to:
   receive anonymized mobility data for a geographic region subdivided into a plurality of map tiles, wherein the anonymized mobility data comprises a plurality of probe data points anonymized with a first anonymization level, wherein sequences of probe data points define trajectories;
   determine, based on the anonymized mobility data, one or more map tiles of the plurality of map tiles where anonymization of trajectories using the first anonymization level fails to satisfy a predetermined anonymity parameter value;
   remove a subset of the anonymized mobility data corresponding to the one or more map tiles; and
   publish the anonymized mobility data without the subset of the anonymized mobility data corresponding to the one or more map tiles for use with one or more location-based services.
10. The computer program product of paragraph 9, wherein the anonymized mobility data for the geographic region comprises the anonymized mobility data satisfying a minimum speed and map-matched to road segments within the plurality of map tiles.
11. The computer program product of paragraph 9, wherein the program code instructions to determine, based on the anonymized mobility data, the one or more map tiles of the plurality of map tiles where the anonymization of the trajectories using the first anonymization level fails to satisfy the predetermined anonymity parameter value comprise program code instructions to:
   determine, based on a size of each of the plurality of map tiles, a threshold number of data points a single data source can generate within a respective map tile of the plurality of map tiles;
   calculate a number of data sources in the respective map tile based on a total number of probe data points within the respective map tile and the threshold number of data points; and
   determine that the respective map tile fails to satisfy the predetermined anonymity parameter value in response to the number of data sources in the respective map tile failing to satisfy a predetermined value.
12. The computer program product of paragraph 11, wherein the threshold number of data points a single data source can generate is determined based on the size of each of the plurality of map tiles, a speed associated with the probe data points, and a distance between the probe data points of a trajectory.
13. The computer program product of paragraph 9, wherein the program code instructions to determine, based on the anonymized mobility data, the one or more map tiles of the plurality of map tiles where the anonymization of the trajectories using the first anonymization level fails to satisfy the predetermined anonymity parameter value comprise program code instructions to:
   analyze geometric patterns of the trajectories within a respective map tile of the plurality of map tiles;
   identify features of the geometric patterns indicating a presence of multiple data sources within the geometric patterns of the trajectories within the respective map tile;
   estimate a number of data sources within the respective map tile based, at least in part, on the features of the geometric patterns indicating the presence of multiple data sources; and
   determine that the respective map tile fails to satisfy the predetermined anonymity parameter value in response to the number of data sources in the respective map tile failing to satisfy a predetermined value.
14. The computer program product of paragraph 13, wherein the features of the geometric patterns indicating the presence of multiple data sources comprise at least trajectories crossing one another and parallel trajectories.
15. The computer program product of paragraph 9, wherein the program code instructions to determine, based on the anonymized mobility data, the one or more map tiles of the plurality of map tiles where the anonymization of the trajectories using the first anonymization level fails to satisfy the predetermined anonymity parameter value comprise program code instructions to:
   determine, a minimum number of trajectories passing through a map tile that satisfies an anonymity threshold;
   calculate a number of trajectories passing through a respective map tile based on the anonymized mobility data; and
   determine that the respective map tile fails to satisfy the predetermined anonymity parameter value in response to the number of trajectories passing through the respective map tile failing to satisfy the minimum number of trajectories.
16. The computer program product of paragraph 9, further comprising program code instructions to:
   apply a second anonymization level to the anonymized mobility data of the one or more map tiles of the plurality of map tiles where the anonymization of the trajectories using the first anonymization level fails to satisfy the predetermined anonymity parameter value to generate re-anonymized mobility data for the one or more map tiles;
   determine if the re-anonymized mobility data satisfies the predetermined anonymity parameter value; and
   publish the re-anonymized mobility data for the one or more map tiles for use with the one or more location-based services in response to the re-anonymized mobility data satisfying the predetermined anonymity parameter value.
17. A method comprising:
   receiving anonymized mobility data for a geographic region subdivided into a plurality of map tiles, wherein the anonymized mobility data comprises a plurality of probe data points anonymized with a first anonymization level, wherein sequences of probe data points define trajectories;
   determining, based on the anonymized mobility data, one or more map tiles of the plurality of map tiles where anonymization of the trajectories using the first anonymization level fails to satisfy a predetermined anonymity parameter value;
   removing a subset of the anonymized mobility data corresponding to the one or more map tiles; and
   publishing the anonymized mobility data without the subset of the anonymized mobility data corresponding to the one or more map tiles for use with one or more location-based services.
18. The method of paragraph 17, wherein the anonymized mobility data for the geographic region comprises the anonymized mobility data satisfying a minimum speed and map-matched to road segments within the plurality of map tiles.
19. The method of paragraph 17, wherein determining, based on the anonymized mobility data, the one or more map tiles of the plurality of map tiles where the anonymization of trajectories using the first anonymization level fails to satisfy the predetermined anonymity parameter value comprises:
   determining, based on a size of each of the plurality of map tiles, a threshold number of data points a single data source can generate within a respective map tile of the plurality of map tiles;
   calculating a number of data sources in the respective map tile based on a total number of probe data points within the respective map tile and the threshold number of data points; and
   determining that the respective map tile fails to satisfy the predetermined anonymity parameter value in response to the number of data sources in the respective map tile failing to satisfy a predetermined value.
20. The method of paragraph 17, wherein determining, based on the anonymized mobility data, the one or more map tiles of the plurality of map tiles where the anonymization of trajectories using the first anonymization level fails to satisfy the predetermined anonymity parameter value comprises:
   analyzing geometric patterns of the trajectories within a respective map tile of the plurality of map tiles;
   identifying features of the geometric patterns indicating a presence of multiple data sources within the geometric patterns of the trajectories within the respective map tile;
   estimating a number of data sources within the respective map tile based, at least in part, on the features of the geometric patterns indicating the presence of multiple data sources; and
   determining that the respective map tile fails to satisfy the predetermined anonymity parameter value in response to the number of data sources in the respective map tile failing to satisfy a predetermined value.

## Claims

1. A computer-implemented method comprising:
receiving anonymized mobility data for a geographic region subdivided into a plurality of map tiles, wherein the anonymized mobility data comprises a plurality of probe data points anonymized with a first anonymization level, wherein sequences of probe data points define trajectories;
determining, based on the anonymized mobility data, one or more map tiles of the plurality of map tiles where anonymization of trajectories using the first anonymization level fails to satisfy a predetermined anonymity parameter value;
removing a subset of the anonymized mobility data corresponding to the one or more map tiles; and
publishing the anonymized mobility data without the subset of the anonymized mobility data corresponding to the one or more map tiles for use with one or more location-based services.

2. The method of claim 1, wherein the anonymized mobility data for the geographic region comprises the anonymized mobility data satisfying a minimum speed and map-matched to road segments within the plurality of map tiles.

3. The method of claim 1, wherein the predetermined anonymity parameter value is a k-anonymity value.

4. The method of claim 1, wherein the probe data corresponding to each map tile of the plurality of map tiles is subdivided into periods of time.

5. The method of claim 1, wherein determining, based on the anonymized mobility data, the one or more map tiles of the plurality of map tiles where the anonymization of the trajectories using the first anonymization level fails to satisfy the predetermined anonymity parameter value comprises:
determining, based on a size of each of the plurality of map tiles, a threshold number of data points a single data source can generate within a respective map tile of the plurality of map tiles;
calculating a number of data sources in the respective map tile based on a total number of probe data points within the respective map tile and the threshold number of data points; and
determining that the respective map tile fails to satisfy the predetermined anonymity parameter value in response to the number of data sources in the respective map tile failing to satisfy a predetermined value.

6. The method of claim 5, wherein the threshold number of data points a single data source can generate is determined based on the size of each of the plurality of map tiles, a speed associated with the probe data points, and a distance between the probe data points of a trajectory.

7. The method of claim 1, wherein determining, based on the anonymized mobility data, the one or more map tiles of the plurality of map tiles where the anonymization of the trajectories using the first anonymization level fails to satisfy the predetermined anonymity parameter value comprises:
analyzing geometric patterns of the trajectories within a respective map tile of the plurality of map tiles;
identifying features of the geometric patterns indicating a presence of multiple data sources within the geometric patterns of the trajectories within the respective map tile;
estimating a number of data sources within the respective map tile based, at least in part, on the features of the geometric patterns indicating the presence of multiple data sources; and
determining that the respective map tile fails to satisfy the predetermined anonymity parameter value in response to the number of data sources in the respective map tile failing to satisfy a predetermined value.

8. The method of claim 7, wherein the features of the geometric patterns indicating the presence of multiple data sources comprise at least trajectories crossing one another and parallel trajectories.

9. The method of claim 7, wherein analyzing geometric patterns of the trajectories within a respective map tile employs an image recognition technique that utilizes a supervised machine learning model.

10. The method of claim 1, wherein determining, based on the anonymized mobility data, the one or more map tiles of the plurality of map tiles where the anonymization of the trajectories using the first anonymization level fails to satisfy the predetermined anonymity parameter value comprises:
determining, a minimum number of trajectories passing through a map tile that satisfies an anonymity threshold;
calculating a number of trajectories passing through a respective map tile based on the anonymized mobility data; and
determining that the respective map tile fails to satisfy the predetermined anonymity parameter value in response to the number of trajectories passing through the respective map tile failing to satisfy the minimum number of trajectories.

11. The method of claim 1, further comprising:
applying a second anonymization level to the anonymized mobility data of the one or more map tiles of the plurality of map tiles where the anonymization of the trajectories using the first anonymization level fails to satisfy the predetermined anonymity parameter value to generate re-anonymized mobility data for the one or more map tiles;
determining if the re-anonymized mobility data satisfies the predetermined anonymity parameter value; and
publishing the re-anonymized mobility data for the one or more map tiles for use with the one or more location-based services in response to the re-anonymized mobility data satisfying the predetermined anonymity parameter value.

12. An apparatus comprising means configured to perform a method according to any of claims 1 to 11.

13. A computer program product comprising computer-executable program code portions stored therein, the computer executable program code portions including program code instructions configured to perform a method according to any of claims 1 to 11.
